# EUROPEAN PATENT SPECIFICATION

(11) **EP 1 347 677 B1**
(45) Date of publication and mention of the grant of the patent: **12.09.2007**
(21) Application number: 01978006.3
(22) Date of filing: 24.10.2001
(51) Int. Cl.: A01D 34/69

(54) **IMPROVED SELF DRIVE ASSEMBLY FOR LAWN MOWER**
VERBESSERTE SELBSTANTRIEBSANORDNUNG FÜR RASENMÄHER
ENSEMBLE DE COMMANDE AUTOMATIQUE PERFECTIONNE POUR TONDEUSE A GAZON

(30) Priority: 24.10.2000 AU PR099800
(43) Date of publication of application: 01.10.2003
(73) Proprietor: Rover Mowers Limited, Brisbane, QLD 4009 (AU)
(72) Inventor: JACKSON, Stephen, Leonard, Mc Dowall, QLD 4053 (AU); DALL'OSTO, Gaven, Ray, Aspley, QLD 4034 (AU); MIATT, Steven, Richard, Narangba, QLD 4504 (AU)
(74) Representative: Van Straaten, Joop
(86) International application number: PCT/AU2001/001355
(87) International publication number: WO 2002/034028

(56) References cited:
- EP-A- 0 532 068
- EP-A1- 0 782 820
- EP-A1- 0 789 989
- AU-A- 4 184 078
- US-A- 4 038 883
- US-A- 4 117 652
- US-A- 4 214 641
- US-A- 4 785 612
- US-A- 5 778 645
- DATABASE WPI Week 199631, Derwent Publications Ltd., London, GB; Class P12, AN 1996-303648, XP002999479 & JP 8 130 960 A 28 May 1996

## Description

### BACKGROUND

The present invention relates to self drive lawn mowers, as disclosed in US-A-4915203, and more particularly relates to an improved self drive assembly for attachment to mowers of the walk behind push variety and which are capable of conversion between a self drive state and a manual state.

### PRIOR ART

There are in existence a wide variety of self drive lawn mowers which require manual engagement and disengagement of a drive assembly by an operator walking behind the mower. The known self drive assemblies operate by taking power from the engine and transferring drive to the rear wheels of the mower.

By way of example, a known mower self drive assembly comprises a gear box mounted on an axle, an input arm on said gear box which takes power from a drive motor via a drive belt, an output connected to the gear box which engages a cog wheel mounted on a wheel hub, such that when the motor of the mower is running, the drive belt transfers engine power to the gear box via the input whereupon the gear box transfers drive to an output which turns the rear wheels of the mower via interengaging cogs. Although the known self drive mowers operate adequately to drive the mower, they suffer from a number of attendant disadvantages arising from the configuration of the drive assembly and its location relative to the opening to the grass catcher. In the known arrangements the gear box and drive arrangements partially obstruct the passage of grass delivered from the cutting blades to the grass catcher. This can cause clogging of the opening to the catcher and in serious cases particularly where the grass is wet, eventual stalling of the motor. Due to the physical size of conventional push type mowers and the limited space available in the cutting deck housing, designs thus far have not overcome the problem of obstruction of the grass catcher by the self drive assembly.

### INVENTION

The present invention seeks to ameliorate the problems associated with the known self drive assemblies by providing an alternative assembly which provides efficient self drive but without obstruction of the chute opening to the grass catcher and unwanted clogging of the grass catcher chute opening.

In its broadest form the present invention comprises a self drive assembly for a walk behind lawn mower according to claim 1.

Prefered embodiments are set out in the dependent claims 2-11.

In another broad form the present invention comprises a walk behind lawn mower according to claim 12.

Preferred embodiments are set out in the dependent claims 13-23.

In another broad form of the method aspect the present invention comprises a method according to claim 24.

### DETAILED DESCRIPTION

The present invention will now be described in more detail according to a preferred but non limiting embodiment and with reference to the accompanying illustrations wherein:
- Figure I: shows a perspective rear view of a mower housing and self drive assembly according to a prior art arrangement.
- Figure 2: shows a perspective view of a self drive assembly according to a preferred embodiment of the invention; and
- Figure 3: shows the drive assembly of figure 2 adapted to a mower and incorporated in a housing.
- Figure 4: shows a perspective view of a gear box of a self drive assembly according to a preferred embodiment of the invention.
- Figure 5: shows a perspective view of the gear box arrangement of figure 4 incorporated with drive assembly protective housings.
- Figure 6: shows the assembly of figure 5 with a clutch and sprocket protected by cover component.
- Figure 7: shows the self drive assembly fully assembled and installed on a mower housing from a front perspective view.

Traditional walk behind self drive lawn mowers comprise a motor which drives a cutting deck. The cutting deck is protected by a housing which defines an underside space in which grass is cut and which exits the housing under energy imparted by cutting blades through a rear opening. Prior art self drive lawn mowers include a self drive assembly which unfortunately due to its configuration and location has caused obstruction to the rear opening in the housing compromising efficient discharge of cut grass through the rear discharge opening. Referring to figure I there is shown a rear perspective view of a prior art mower housing 1 including a rear opening 2 which allows passage of grass delivered from a cutter deck within housing 1 to a grass catcher (not shown) having a corresponding entry opening which opposes opening 2. Housing 1 further comprises a self drive assembly 3 mounted on rear wheel axle 4.

Self drive assembly 2 engages a motor which would normally be located in the region indicated by arrow 5 and by indirect transmission to axle 4 imparts self drive to the mower when axle 4 is caused to rotate. Ground engaging wheels normally located (but not shown) at ends 6 and 7 of axle 4 and driven by axle 4 self drive the mower.

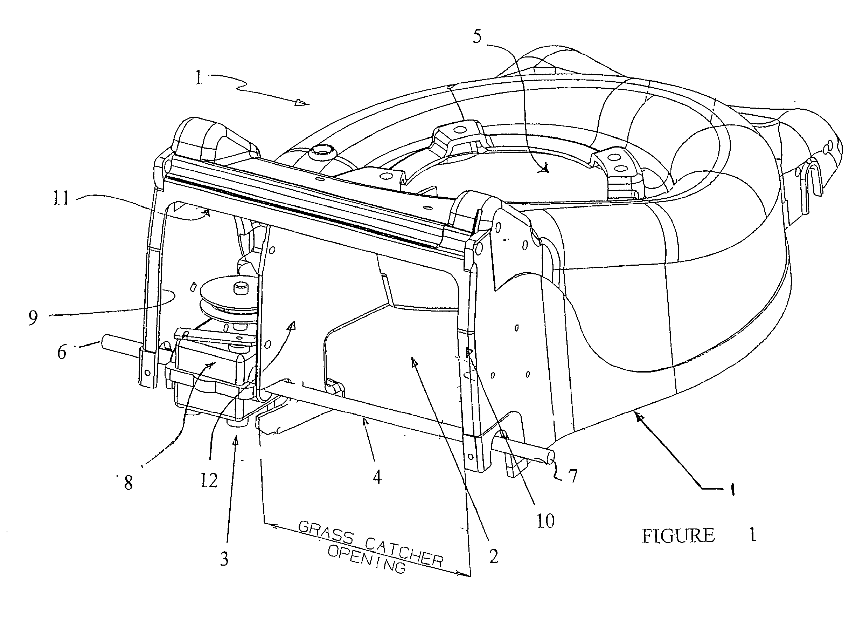

Self drive assembly 3 includes gear box 8 directly connected to axle 4 so that direct self drive is imparted to the wheels. The location of gear box 8 significantly reduces the area of opening 2 available to deliver grass from the cutter deck to the grass catcher. Thus, opening 2 bounded and defined by walls 9 and 10 and roof 11 represents the potential opening area available to receive grass from the cutter deck into the grass catcher but this is significantly reduced in area by the location and configuration of self drive assembly 3. The configuration of the known self drive assemblies have traditionally involved a compromise between the advantages of including the self drive feature and the resultant restriction to the remaining opening space available to receive cut grass. The inclusion of the self drive arrangement as shown in figure 1 necessitates a substantial reduction of up to 30-40% of the area of opening 2 and a resultant decrease in the rate and efficiency of grass catching for a mower of a given size cutter deck. This results in an available opening defined by roof 11 wall 10 and partition 12. There has been a long felt want in the mower industry to provide a self drive mower of the walk behind type which includes a self drive assembly installed without compromise to the maximum available opening area in a housing through which cut grass may pass. The higher the area of the grass discharge opening the more efficient the mower. Gear box 8 of drive assembly 3 unavoidably takes up the space defined by roof 11 wall 9 and partition 12 as there is direct drive between gear box 8 and axle 4 which dictates gear box proximity to axle 4.

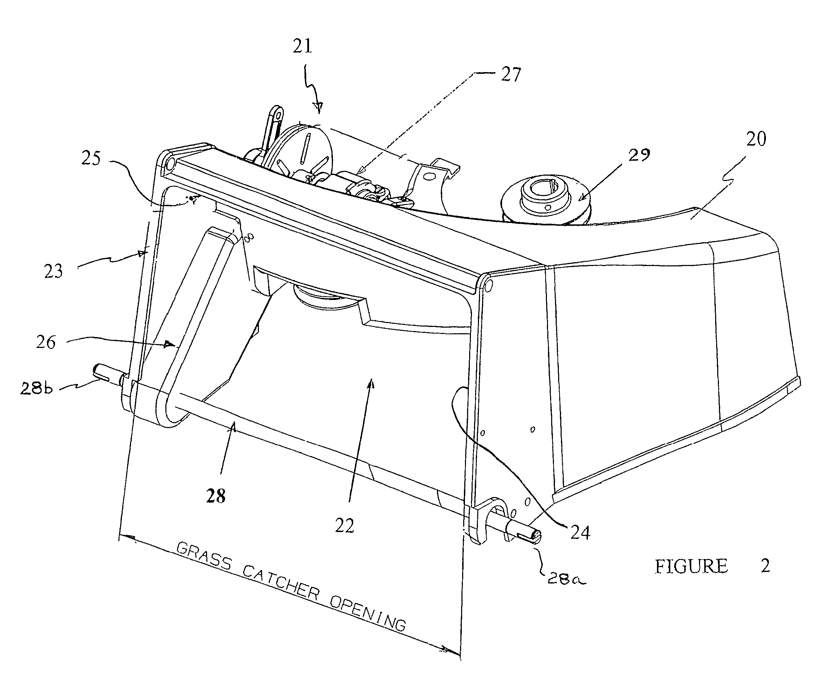

Figure 2 shows a cutter deck housing 20 of a walk behind mower with self drive assembly 21 connected thereto according to one embodiment of the invention. Housing 20 includes opening 22 which allows passage of grass delivered from a cutter deck within housing 20 to a grass catcher (not shown) having an entry opening which opposes opening 22. Drive assembly 21 engages a motor which communicates with engine pulley 29 and further includes gear box 27 which is located at a predetermined clearance above axle 28 so that direct self drive is imparted to the wheels which would be fitted to ends 28a and 28b. The location of the gear box 27 significantly increases the available area of opening 22 available to receive grass from a grass catcher which opposes opening 22.

Opening 22 which is bounded and defined by walls 23 and 24 and roof 25 represents the potential opening area available to receive grass from a grass catcher. Opening 22 is substantially free of obstruction and is significantly increased in area of grass delivery to a grass catcher compared to the available area remaining after subtracting the area taken up by self drive assembly 3 illustrated in Figure 1. The configuration of that assembly would if the prior art self drive assembly was used cause a substantial reduction of up to 30-40% of the area of opening 22 and a resultant decrease in the rate and efficiency of grass catching for a mower of a given size. With self drive assembly 21 installed on housing 20 the area of opening 22 available to receive grass from a grass catcher is increased to an extent that almost all opening 22 is available to allow passage of cut grass. The only obstruction of opening 22 is casing 26 which comprises a drive belt or chain transmitting drive from gear box 27 to axle 28. Axle 28 receives wheels (not shown) on ends 28a and 28b. Casing 26 takes up only a small portion of opening 22 leaving opening 22 substantially free of obstruction so all available area in opening 22 is dedicated to allowing passage of grass. This has the advantage that an increased volume of grass can be delivered through opening 22 by a cutter deck for the same size mower. Compared to the known self drive assemblies, the alternative configuration of self drive assembly 21 renders the opening substantially free of obstruction thereby minimising the risk of unwanted clogging of opening 22 with grass clippings. Casing 26 may be integral with wall 23 or a separate component attached thereto. Casing 26 also prevents fouling of output assembly components to be described below.

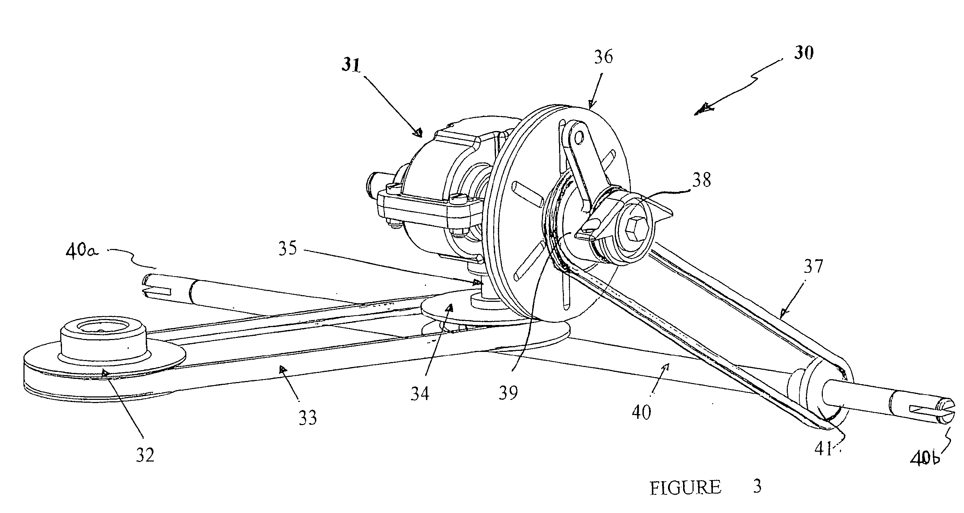

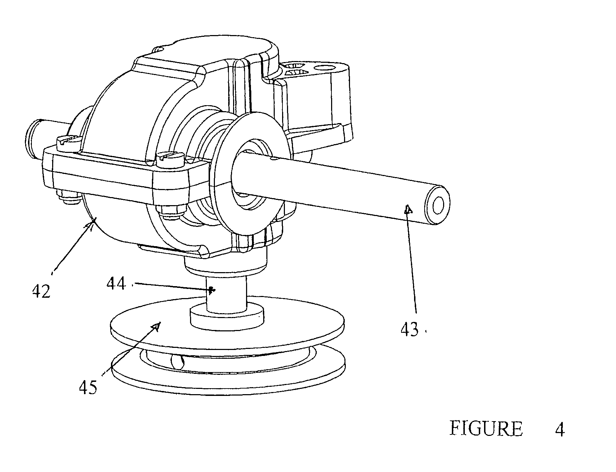

Referring to figure 3 there is shown a perspective view of a self drive assembly 30 according to a preferred embodiment for attachment to a mower of the walk behind type. Assembly 30 which has been exploded from a mower housing (not shown for clarity) is viewed from a side frontal direction. Assembly 30 includes a gear box 31 which transmits drive from a motor via a clutch to a drive axle. Power from a drive motor is transferred to drive pulley 32 which drives belt 33. Belt 33 also engages input pulley 34 which is connected to input shaft 35 which terminates at gear box 31. Gear box 31 is operably linked to output clutch 36 disposed in a generally vertical plane and which receives drive belt or chain 37. Output clutch 36 is directly connected to gear box 31 via output shaft 38 and includes sprocket 39 which receives drive chain 37. Drive chain 37 is connected to axle 40 via sprocket 41 such that rotation of output clutch 36 responsive to drive imparted from a motor via input pulley 34 and input shaft 35 to gear box 31 causes axle 40 to rotate thereby imparting drive to wheels (not shown) mounted on ends 40a and 40b of axle 40 of the lawn mower to which the drive assembly is attached. Self drive assembly 30 as shown, is located above axle 40 at a height which comfortably clears axle 40 and minimises or eliminates obstruction by gear box 31 of an opening in a mower housing which in the arrangement shown in figure 3 would be on the left side of gear box 31 and allows passage of grass cut by the mower for delivery to a grass catcher. Various alternatives may be employed in the self drive assembly 30 including substitution of a belt for chain 37 and replacement of sprockets 39 and 41 with pulleys. Referring to figure 4 there is shown a detailed view of the configuration of a gear box 42 from a self drive assembly according to a preferred embodiment of the invention. Gear box 42 includes output shaft 43 and input shaft 44. Input shaft 44 receives input pulley 45 which is driven by a motor on a lawn mower. Shaft 43 receives a sprocket which receives a chain which transfers drive from shaft 43 to a wheel axle in the same manner as that described with reference to figure 3. Gear box 42 as with the other gear boxes described in this specification receives input drive from a motor via a downwardly depending shaft such as shaft 44 as shown in figure 4.

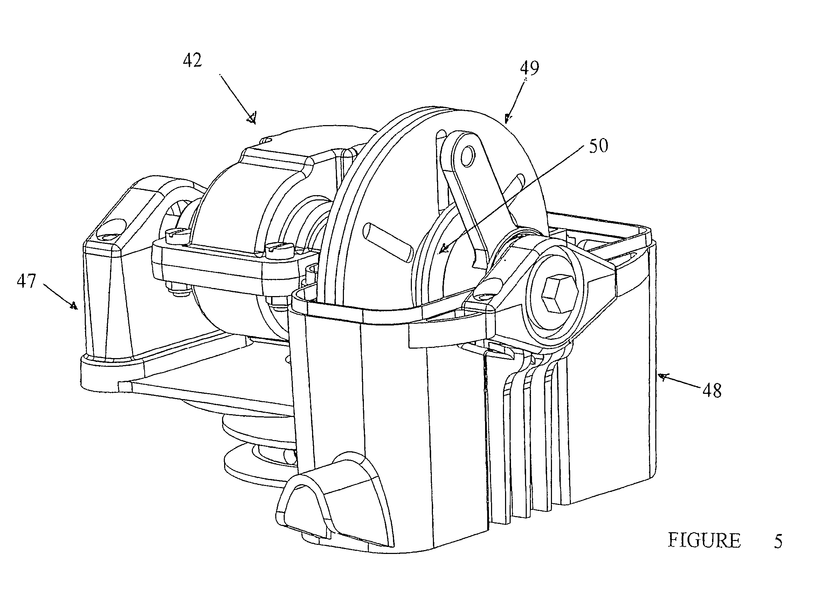

Figure 5 shows the self drive assembly of figure 4 including housings 47 and 48. Housing 48 accommodates the output assembly which includes output clutch 49 and sprocket 50. In use, clutch 49 is covered and this also protects the drive belt or chain driven by the sprocket.

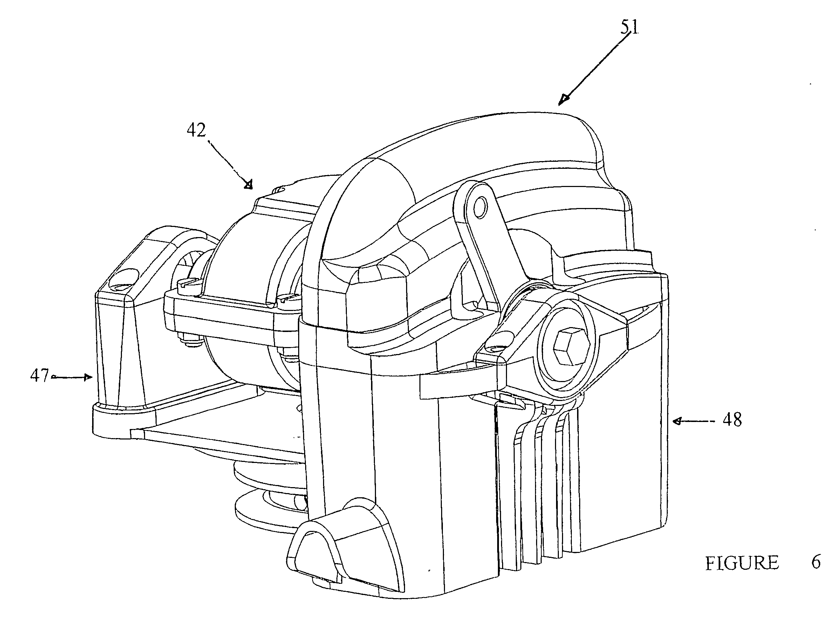

Figure 6 shows the assembly of figure 5 with clutch 49 and sprocket 50 protected by cover component 51.

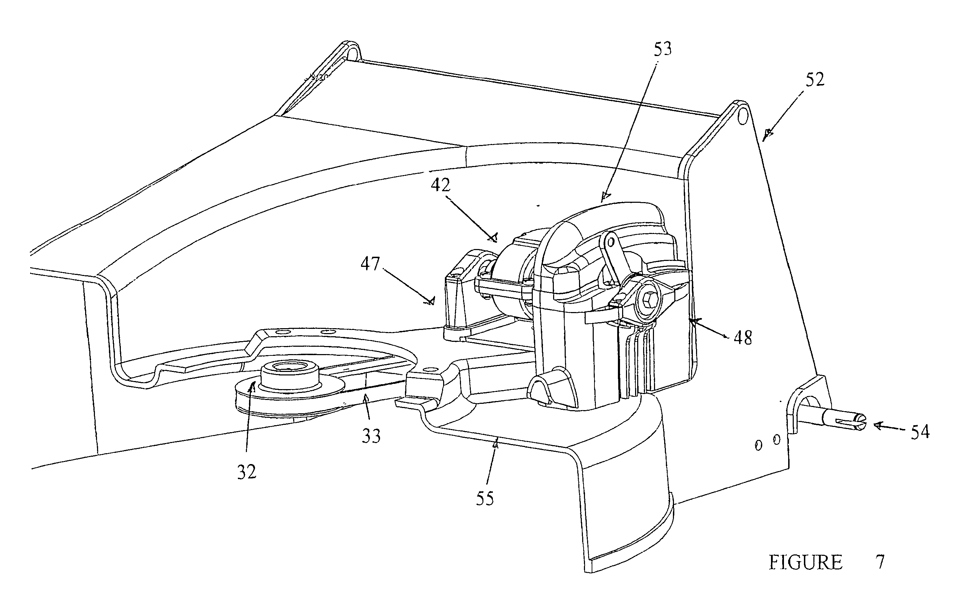

Figure 7 shows the self drive assembly fully assembled and installed on mower housing 52. It can be seen from the front perspective view in figure 7 that assembly 53 is arranged such that all components of the assembly 53 except for the transmission belt 37 (see figure 3) and casing 26 (see figure 2) are above shaft 54 and above cutter deck cowling 55. This allows almost unobstructed passage of grass through an opening in the rear of housing 52 to a grass catcher or in the event of non use of a grass catcher to the outside of housing 52.

## Claims

1. A self drive assembly (21) for a walk behind lawn mower of the type including a motor for driving a cutting deck, front and rear wheels supporting a housing (20) for said cutter deck, the housing (20) including a rear opening (22) which allows passage therethrough of grass delivered from said cutting deck into a grass catcher which detachably engages said housing (20) and opposes said opening (22) the self drive assembly (21) including; a gear box (27) including an input (34, 35) connected to an output (32) of said motor; an output assembly (38) connected to said gear box (27) which drives a rear axle (28) at whose ends said rear wheels are connected, means (36) for engaging and disengaging said drive assembly (21) such that when the drive assembly (21) is engaged said mower is self propelled and when the assembly (21) is disengaged said mower is manually operable; **characterized in that** the self drive assembly (21) is mounted on the mower such that said transmission / gear box (27) is located forward of and elevated above said rear wheel axle (28) to maximise the area defined by said rear opening (22) available to discharge grass from said cutting deck to said grass catcher; and wherein said output assembly (38) transfers drive to said axle (28) at a single contact location on said axle (28) adjacent one of said rear wheels

2. An assembly (21) according to claim 1 wherein said rear opening (22) is defined by side walls (23,24) and a roof of said housing (20),

3. An assembly (21) according to claim 2 wherein said output assembly (21) is disposed in a housing (26) which lies adjacent one said side walls(23,24).

4. An assembly (21) according to claim 3 wherein said housing (26) is integral with said side wall (23).

5. An assembly (21) according to claim 4 wherein said self drive assembly (21) is configured to allow clear passage of said grass through up to 95% of the area of said rear opening (22).

6. An assembly (21) according to claim 5 wherein the output assembly (38) includes drive means for communicating between said gear box (27) and a drive pulley (37) which engages said axle (28,40).

7. An assembly (21) according to claim 6 wherein, said output assembly (38) includes a drive pulley (37) adjacent said gear box (31).

8. An assembly (21) according to claim 7 wherein said pulley (37) on said rear axle (28,40) includes a sprocket (41) on said rear axle (28, 40),

9. An assembly (21) according to claim 8 wherein said drive means to said axle (28, 40) is imparted from said gear box (31) via a drive chain (37) which engages the sprocket (41) on said shaft (40).

10. An assembly (21) according to claim 8 wherein drive to said axle (40) is imparted from said gear box (31) via a drive belt (37) which engages said sprocket (41) on said shaft (40).

11. An assembly (21) according to claim 9 or 10 wherein said drive belt or chain (37) engages via a first end a clutch (36) operably linked to said gear box (31), the clutch (36) including a sprocket or pulley which imparts drive via said belt or chain (37) to said axle (40)

12. A lawn mower of the type including a motor for driving a cutting deck, front and rear wheels supporting a housing (20) for said cutter deck, the housing (20) including a rear opening (22) which, allows passage therethrough of grass delivered from said cutting deck into a grass catcher which detachably engages said housing (20) and opposes said opening, (22) the mower further including a self drive assembly, (21) wherein the self drive assembly (21) includes;
a gear box (27) including an input (34,35) operably connected to an output (32) of said motor;
an output assembly (38) connected to said gear box (27) which drives a wheel axle (28) of said mower, means (36) for engaging and disengaging said drive assembly (21) such that when the drive assembly (21) is engaged said mower is self propelled and when the assembly (21) is disengaged said mower is manually operable; **characterized in that**
the self drive assembly (21) is mounted on the mower such that said transmission gear box (27) is located forward of and elevated above said rear wheel axle (28) to maximise the area defined by said rear opening (22) available to discharge grass from said outting deck to said grass catcher; and wherein said output assembly (38) transfers drive to said axle (28) at a single contact location on said axle (28) adjacent one of said rear wheels

13. A lawn mower according to claim 12 wherein said rear opening (22) is defined by side walls (23,24) and a roof of said housing (20).

14. A lawn mower according to claim 13 wherein said output assembly (21), is disposed in a housing (26) which lies adjacent one said side walls (23).

15. A lawn mower according to claim 14 wherein said housing (26) is integral with said side walls (23).

16. A lawn mower according to claim 15 wherein said self drive assembly is configured to allow clear passage of said grass through up to 95% of the area of said rear opening (22).

17. A lawn mower according to claim 16 wherein the output assembly (38) includes drive means for communicating between said gear box (27) and a drive pulley (37) which engages said axle (28, 40).

18. A lawn mower according to claim 17 wherein, said output assembly (38) includes a drive pulley (37) adjacent said gear box (31)

19. A lawn mower according to claim 18 wherein said pulley (37) on said rear axle (28, 40) includes a sprocket (41) on said rear axle (28, 40)

20. A lawn mower according to claim 19 wherein said drive means to said axle (28,40) is imparted from said gear box (31) via a drive chain (37) which engages the sprocket (41) on said shaft (40).

21. A lawn mower according to claim 19 wherein drive to said axle (40) is imparted from said gear box (31) via a drive belt (37) which engages said sprocket (41) on said shaft (40).

22. A lawn mower according to claim 20 or 21 wherein said drive belt or chain (37) engages via a first end a clutch (36) operably linked to said gear box (31), the clutch (36) including a sprocket or pulley which imparts drive via said belt or chain (37) to said axle (40).

23. A lawn mower according to claim 22 wherein a drive pulley and belt or chain (37) drives said rear axle (40) when said self drive assembly (21) is actuated.

24. A method of a constructing of a drive assembly (21) for a self drive lawn mower, of the type including a motor for driving a cutting deck, front and rear wheels supporting a housing (20) for said cutter deck, the housing (20) including a rear openings (22) which allows passage therethrough of grass delivered from said cutting deck into a grass catcher which detachably engages said housing (20) and opposes said opening (22) the method comprising the steps of;
a) taking a gear box (27) having an input (34,35) and an output (38)
b) attaching a clutch (36) to said output (38) of said gear box (27)
c) attaching a pulley (33) to said input (34,35) of said gear box (27) ;
d) providing a link (32) between said pulley (33) and said drive motor;
e) providing a link (37) between said clutch (36) and an axle of said mower (40)
f) providing means for engaging and disengaging said drive assembly such that when the drive assembly (21) is engaged said mower is self propelled and when the assembly (21) lis disengaged said mower is manually operable;
g) locating said drive assembly (21) on said mower such that said gear box (27) is located above and forward of said wheel axle to maximise the area defined by said rear opening (22) available to receive grass from said cutting deck to said grass catcher.

25. A method according to claim 24 wherein said gear box (27) and clutch (36) are located above said wheel axle (40) with sufficient clearance to maximize the area of said rear opening (22) which will allow grass to pass after cutting by said cutting deck.

## Patentansprüche

1. Selbstantriebsaufbau (21) für einen handgeführten Rasenmäher, dessen Benutzer hinterherläuft, von dem Typ, der einen Motor zum Antreiben eines Schneidewerks und Vorder- und Hinterräder, die ein Gehäuse (20) für das Schneidewerk tragen, umfasst, wobei das Gehäuse (20) eine hintere Öffnung (22) umfasst, die einen Durchgang von Gras, das vom Schneidewerk geliefert wird, in einen Grasfänger, welcher abnehmbar in das Gehäuse (20) einrastet und der Öffnung (22) gegenüberliegt, gestattet, wobei der Selbstantriebsaufbau (21) Folgendes umfasst:
einen Getriebekasten (27), beinhaltend einen Eingang (34, 35), der mit einem Ausgang (32) des Motors verbunden ist; einen Ausgabeaufbau (38), der mit dem Getriebekasten (27) verbunden ist und eine Hinterachse (28) antreibt, an deren Enden die Hinterräder angeschlossen sind; und ein Mittel (36) zum Einkuppeln und Auskuppeln des Antriebsaufbaus (21), so dass der Rasenmäher selbstfahrend ist, wenn der Antriebsaufbau (21) eingekuppelt ist, und der Rasenmäher manuell betrieben werden kann, wenn der Aufbau (21) ausgekuppelt ist,
**dadurch gekennzeichnet, dass** der Selbstantriebsaufbau (21) so am Rasenmäher angebracht ist, dass sich die Übertragung/der Getriebekasten (27) vor der Hinterradachse (28) und darüber erhöht befindet, um die durch die hintere Öffnung (22) definierte Fläche, die zum Abgeben von Gras vom Schneidewerk zum Grasfänger verfügbar ist, zu maximieren; und wobei der Ausgabeaufbau (38) den Antrieb an einer einzelnen Kontaktstelle an der Achse (28) neben einem der Hinterräder zur Achse (28) überträgt.

2. Aufbau (21) nach Anspruch 1, wobei die hintere Öffnung (22) durch Seitenwände (23, 24) und ein Dach des Gehäuses (20) definiert ist.

3. Aufbau (21) nach Anspruch 2, wobei der Ausgabeaufbau (21) in einem Gehäuse (26) angeordnet ist, das neben einer der Seitenwände (23, 24) liegt.

4. Aufbau (21) nach Anspruch 3, wobei das Gehäuse (26) mit der Seitenwand (23) einstückig ausgeführt ist.

5. Aufbau (21) nach Anspruch 4, wobei der Selbstantriebsaufbau (21) dazu gestaltet ist, einen freien Durchgang des Grases durch bis zu 95 % der Fläche der hinteren Öffnung (22) zu gestatten.

6. Aufbau (21) nach Anspruch 5, wobei der Ausgabeaufbau (38) ein Antriebsmittel zur Übertragung zwischen dem Getriebekasten (27) und einer Antriebsscheibe (37), die mit der Achse (28, 40) eingreift, umfasst.

7. Aufbau (21) nach Anspruch 6, wobei der Ausgabeaufbau (38) eine Antriebsscheibe (37) neben dem Getriebekasten (31) umfasst.

8. Aufbau (21) nach Anspruch 7, wobei die Scheibe (37) an der Hinterachse (28, 40) ein Kettenrad (41) an der Hinterachse (28, 40) umfasst.

9. Aufbau (21) nach Anspruch 8, wobei das Antriebsmittel zur Achse (28, 40) vom Getriebekasten (31) über eine Antriebskette (37) übermittelt wird, die mit dem Kettenrad (41) an der Welle (40) eingreift.

10. Aufbau (21) nach Anspruch 8, wobei der Antrieb zur Achse (40) vom Getriebekasten (31) über einen Antriebsriemen (37) übermittelt wird, der mit dem Kettenrad (41) an der Welle (40) eingreift.

11. Aufbau (21) nach Anspruch 9 oder 10, wobei der Antriebsriemen oder die Kette (37) über ein erstes Ende mit einer Kupplung (36) eingreift, die betrieblich mit dem Getriebekasten (31) verbunden ist, wobei die Kupplung (36) ein Kettenrad oder eine Scheibe umfasst, das bzw. die den Antrieb über den Riemen oder die Kette (37) zur Achse (40) übermittelt.

12. Rasenmäher von dem Typ, der einen Motor zum Antreiben eines Schneidewerks und Vorder- und Hinterräder, die ein Gehäuse (20) für das Schneidewerk tragen, umfasst, wobei das Gehäuse (20) eine hintere Öffnung (22) umfasst, die einen Durchgang von Gras, das vom Schneidewerk geliefert wird, in einen Grasfänger, welcher abnehmbar in das Gehäuse (20) einrastet und der Öffnung (22) gegenüberliegt, gestattet, wobei der Rasenmäher ferner einen Selbstantriebsaufbau (21) umfasst, wobei der Selbstantriebsaufbau (21) Folgendes umfasst:
einen Getriebekasten (27), beinhaltend einen Eingang (34, 35), der betrieblich mit einem Ausgang (32) des Motors verbunden ist; einen Ausgabeaufbau (38), der mit dem Getriebekasten (27) verbunden ist und eine Radachse (28) des Rasenmähers antreibt; und ein Mittel (36) zum Einkuppeln und Auskuppeln des Antriebsaufbaus (21), so dass der Rasenmäher selbstfahrend ist, wenn der Antriebsaufbau (21) eingekuppelt ist, und der Rasenmäher manuell betrieben werden kann, wenn der Aufbau (21) ausgekuppelt ist,
**dadurch gekennzeichnet, dass** der Selbstantriebsaufbau (21) so am Rasenmäher angebracht ist, dass sich die Übertragung/der Getriebekasten (27) vor der Hinterradachse (28) und darüber erhöht befindet, um die durch die hintere Öffnung (22) definierte Fläche, die zum Abgeben von Gras vom Schneidewerk zum Grasfänger verfügbar ist, zu maximieren; und wobei der Ausgabeaufbau (38) den Antrieb an einer einzelnen Kontaktstelle an der Achse (28) neben einem der Hinterräder zur Achse (28) überträgt.

13. Rasenmäher nach Anspruch 12, wobei die hintere Öffnung (22) durch Seitenwände (23, 24) und ein Dach des Gehäuses (20) definiert ist.

14. Rasenmäher nach Anspruch 13, wobei der Ausgabeaufbau (21) in einem Gehäuse (26) angeordnet ist, das neben einer der Seitenwände (23) liegt.

15. Rasenmäher nach Anspruch 14, wobei das Gehäuse (26) mit der Seitenwand (23) einstückig ausgeführt ist.

16. Rasenmäher nach Anspruch 15, wobei der Selbstantriebsaufbau dazu gestaltet ist, einen freien Durchgang des Grases durch bis zu 95 % der Fläche der hinteren Öffnung (22) zu gestatten.

17. Rasenmäher nach Anspruch 16, wobei der Ausgabeaufbau (38) ein Antriebsmittel zur Übertragung zwischen dem Getriebekasten (27) und einer Antriebsscheibe (37), die mit der Achse (28, 40) eingreift, umfasst.

18. Rasenmäher nach Anspruch 17, wobei der Ausgabeaufbau (38) eine Antriebsscheibe (37) neben dem Getriebekasten (31) umfasst.

19. Rasenmäher nach Anspruch 18, wobei die Scheibe (37) an der Hinterachse (28, 40) ein Kettenrad (41) an der Hinterachse (28, 40) umfasst.

20. Rasenmäher nach Anspruch 19, wobei das Antriebsmittel zur Achse (28, 40) vom Getriebekasten (31) über eine Antriebskette (37) übermittelt wird, die mit dem Kettenrad (41) an der Welle (40) eingreift.

21. Rasenmäher nach Anspruch 19, wobei der Antrieb zur Achse (40) vom Getriebekasten (31) über einen Antriebsriemen (37) übermittelt wird, der mit dem Kettenrad (41) an der Welle (40) eingreift.

22. Rasenmäher nach Anspruch 20 oder 21, wobei der Antriebsriemen oder die Kette (37) über ein erstes Ende mit einer Kupplung (36) eingreift, die betrieblich mit dem Getriebekasten (31) verbunden ist, wobei die Kupplung (36) ein Kettenrad oder eine Scheibe umfasst, das bzw. die den Antrieb über den Riemen oder die Kette (37) zur Achse (40) übermittelt.

23. Rasenmäher nach Anspruch 22, wobei eine Antriebsscheibe und der Riemen oder die Kette (37) die Hinterachse (40) antreiben, wenn der Selbstantriebsaufbau (21) betätigt ist.

24. Verfahren zum Aufbauen eines Antriebsaufbaus (21) für einen Selbstantriebs-Rasenmäher von dem Typ, der einen Motor zum Antreiben eines Schneidewerks und Vorder- und Hinterräder, die ein Gehäuse (20) für das Schneidewerk tragen, umfasst, wobei das Gehäuse (20) eine hintere Öffnung (22) umfasst, die einen Durchgang von Gras, das vom Schneidewerk geliefert wird, in einen Grasfänger, welcher abnehmbar in das Gehäuse (20) einrastet und der Öffnung (22) gegenüberliegt, gestattet, wobei das Verfahren die folgenden Schritte umfasst:
a) Nehmen eines Getriebekastens (27), der einen Eingang (34, 35) und einen Ausgang (38) aufweist;
b) Anbringen einer Kupplung (36) am Ausgang (38) des Getriebekastens (27);
c) Anbringen einer Scheibe (33) am Eingang (34, 35) des Getriebekastens (27);
d) Schaffen einer Verbindung (32) zwischen der Scheibe (33) und dem Antriebsmotor;
e) Schaffen einer Verbindung (37) zwischen der Kupplung (36) und einer Achse des Rasenmähers (40);
f) Bereitstellen eines Mittels zum Einkuppeln und Auskuppeln des Antriebsaufbaus, so dass der Rasenmäher selbstfahrend ist, wenn der Antriebsaufbau (21) eingekuppelt ist, und der Rasenmäher manuell betrieben werden kann, wenn der Aufbau (21) ausgekuppelt ist;
g) derartiges Anordnen des Antriebsaufbaus (21) auf dem Rasenmäher, dass sich der Getriebekasten (27) über und vor der Radachse befindet, um die durch die hintere Öffnung (22) definierte Fläche, die zum Erhalt von Gras vom Schneidewerk zum Grasfänger verfügbar ist, zu maximieren

25. Verfahren nach Anspruch 24, wobei sich der Getriebekasten (27) und die Kupplung (36) mit einem ausreichenden Abstand über der Radachse (40) befinden, dass die Fläche der hinteren Öffnung (22), die dem Gras nach dem Schneiden durch das Schneidewerk einen Durchgang gestatten wird, maximiert wird.

## Revendications

1. Assemblage automoteur (21) pour une tondeuse à gazon autotractée du type comprenant un moteur pour entraîner un plateau de coupe, des roues avant et arrière supportant un carter (20) pour ledit plateau de coupe, le carter (20) comprenant une ouverture arrière (22) qui permet le passage à travers celle-ci de l'herbe fournie par ledit plateau de coupe dans un bac à herbe qui s'enclenche de façon amovible dans ledit carter (20) et fait face à ladite ouverture (22), l'assemblage automoteur (21) comprenant :
une boîte de vitesses (27) comprenant une entrée (34, 35) raccordée à une sortie (32) dudit moteur ;
un assemblage de sortie (38) raccordé à ladite boîte de vitesses (27) qui entraîne un essieu arrière (28) aux extrémités duquel lesdites roues arrière sont rattachées ;
un moyen (36) pour mettre en prise et dégager ledit assemblage d'entraînement (21) de telle sorte que quand l'assemblage d'entraînement (21) est en prise, ladite tondeuse est autopropulsée, et quand l'assemblage (21) est dégagé, ladite tondeuse est utilisable de façon manuelle ;
**caractérisé en ce que**
l'assemblage automoteur (21) est installé sur la tondeuse de telle sorte que ladite transmission/boîte de vitesses (27) est située à l'avant et élevée au-dessus dudit essieu de roues arrière (28) pour maximiser la superficie définie par ladite ouverture arrière (22) disponible pour décharger l'herbe dudit plateau de coupe vers ledit bac à herbe ; et
dans lequel ledit assemblage de sortie (38) transfère l'entraînement audit essieu (28) en un seul lieu de contact sur ledit essieu (28) à côté de l'une desdites roues arrière.

2. Assemblage (21) selon la revendication 1, dans lequel ladite ouverture arrière (22) est définie par des parois latérales (23, 24) et un toit dudit carter (20).

3. Assemblage (21) selon la revendication 2, dans lequel ledit assemblage de sortie (21) est disposé dans un carter (26) qui est adjacent à l'une desdites parois latérales (23, 24).

4. Assemblage (21) selon la revendication 3, dans lequel ledit carter (26) est solidaire de ladite paroi latérale (23).

5. Assemblage (21) selon la revendication 4, dans lequel ledit assemblage automoteur (21) est configuré pour permettre un passage libre de ladite herbe à travers jusqu'à 95 % de la superficie de ladite ouverture arrière (22).

6. Assemblage (21) selon la revendication 5, dans lequel l'assemblage de sortie (38) comprend un moyen d'entraînement pour communiquer entre ladite boîte de vitesses (27) et une poulie d'entraînement (37) qui entraîne ledit essieu (28, 40).

7. Assemblage (21) selon la revendication 6, dans lequel ledit assemblage de sortie (38) comprend une poulie d'entraînement (37) adjacente à ladite boîte de vitesses (31).

8. Assemblage (21) selon la revendication 7, dans lequel ladite poulie (37) sur ledit essieu arrière (28, 40) comprend un pignon (41) sur ledit essieu arrière (28, 40).

9. Assemblage (21) selon la revendication 8, dans lequel ledit moyen d'entraînement pour ledit essieu (28, 40) est appliqué à partir de ladite boîte de vitesses (31) par l'intermédiaire d'une chaîne de transmission (37) qui engrène le pignon (41) sur ledit arbre (40).

10. Assemblage (21) selon la revendication 8, dans lequel l'entraînement pour ledit essieu (40) est appliqué à partir de ladite boîte de vitesses (31) par l'intermédiaire d'une courroie de transmission (37) qui entraîne ledit pignon (41) sur ledit arbre (40).

11. Assemblage (21) selon la revendication 9 ou 10, dans lequel ladite courroie ou chaîne de transmission (37) entraîne par l'intermédiaire d'une première extrémité un embrayage (36) relié de façon opérationnelle à ladite boîte de vitesses (31), l'embrayage (36) comprenant un pignon ou une poulie qui applique un entraînement par l'intermédiaire de ladite courroie ou chaîne (37) audit essieu (40).

12. Tondeuse à gazon du type comprenant un moteur pour entraîner un plateau de coupe, des roues avant et arrière supportant un carter (20) pour ledit plateau de coupe, le carter (20) comprenant une ouverture arrière (22) qui permet le passage à travers celle-ci de l'herbe fournie par ledit plateau de coupe dans un bac à herbe qui s'enclenche de façon amovible dans ledit carter (20) et fait face à ladite ouverture (22), la tondeuse comprenant en outre un assemblage automoteur (21), dans laquelle l'assemblage automoteur (21) comprend :
une boîte de vitesses (27) comprenant une entrée (34, 35) raccordée de façon opérationnelle à une sortie (32) dudit moteur ;
un assemblage de sortie (38) raccordé à ladite boîte de vitesses (27) qui entraîne un essieu de roues (28) de ladite tondeuse ;
un moyen (36) pour mettre en prise et dégager ledit assemblage d'entraînement (21) de telle sorte que quand l'assemblage d'entraînement (21) est en prise, ladite tondeuse est autopropulsée, et quand l'assemblage (21) est dégagé, ladite tondeuse est utilisable de façon manuelle ;
**caractérisée en ce que**
l'assemblage automoteur (21) est installé sur la tondeuse de telle sorte que ladite transmission/boîte de vitesses (27) est située à l'avant et élevée au-dessus dudit essieu de roues arrière (28) pour maximiser la superficie définie par ladite ouverture arrière (22) disponible pour décharger l'herbe dudit plateau de coupe vers ledit bac à herbe ; et
dans laquelle ledit assemblage de sortie (38) transfère l'entraînement audit essieu (28) en un seul lieu de contact sur ledit essieu (28) à côté de l'une desdites roues arrière.

13. Tondeuse à gazon selon la revendication 12, dans laquelle ladite ouverture arrière (22) est définie par des parois latérales (23, 24) et un toit dudit carter (20).

14. Tondeuse à gazon selon la revendication 13, dans laquelle ledit assemblage de sortie (21) est disposé dans un carter (26) qui est adjacent à l'une desdites parois latérales (23).

15. Tondeuse à gazon selon la revendication 14, dans laquelle ledit carter (26) est solidaire de ladite paroi latérale (23).

16. Tondeuse à gazon selon la revendication 15, dans laquelle ledit assemblage automoteur (21) est configuré pour permettre un passage libre de ladite herbe à travers jusqu'à 95 % de la superficie de ladite ouverture arrière (22).

17. Tondeuse à gazon selon la revendication 16, dans laquelle l'assemblage de sortie (38) comprend un moyen d'entraînement pour communiquer entre ladite boîte de vitesses (27) et une poulie d'entraînement (37) qui entraîne ledit essieu (28, 40).

18. Tondeuse à gazon selon la revendication 17, dans laquelle ledit assemblage de sortie (38) comprend une poulie d'entraînement (37) adjacente à ladite boîte de vitesses (31).

19. Tondeuse à gazon selon la revendication 18, dans laquelle ladite poulie (37) sur ledit essieu arrière (28, 40) comprend un pignon (41) sur ledit essieu arrière (28, 40).

20. Tondeuse à gazon selon la revendication 19, dans laquelle ledit moyen d'entraînement pour ledit essieu (28, 40) est appliqué à partir de ladite boîte de vitesses (31) par l'intermédiaire d'une chaîne de transmission (37) qui engrène le pignon (41) sur ledit arbre (40).

21. Tondeuse à gazon selon la revendication 19, dans laquelle l'entraînement pour ledit essieu (40) est appliqué à partir de ladite boîte de vitesses (31) par l'intermédiaire d'une courroie de transmission (37) qui entraîne ledit pignon (41) sur ledit arbre (40).

22. Tondeuse à gazon selon la revendication 20 ou 21, dans laquelle ladite courroie ou chaîne de transmission (37) entraîne par l'intermédiaire d'une première extrémité un embrayage (36) relié de façon opérationnelle à ladite boîte de vitesses (31), l'embrayage (36) comprenant un pignon ou une poulie qui applique un entraînement par l'intermédiaire de ladite courroie ou chaîne (37) audit essieu (40).

23. Tondeuse à gazon selon la revendication 22, dans laquelle une poulie d'entraînement et une courroie ou une chaîne de transmission (37) entraînent ledit essieu arrière (40) lorsque ledit assemblage automoteur (21) est actionné.

24. Procédé de construction d'un assemblage d'entraînement (21) pour une tondeuse à gazon automotrice, du type comprenant un moteur pour entraîner un plateau de coupe, des roues avant et arrière supportant un carter (20) pour ledit plateau de coupe, le carter (20) comprenant une ouverture arrière (22) qui permet le passage à travers celle-ci de l'herbe fournie par ledit plateau de coupe dans un bac à herbe qui s'enclenche de façon amovible dans ledit carter (20) et est fait face à ladite ouverture (22), le procédé comprenant les étapes suivantes :
a) prise d'une boîte de vitesses (27) ayant une entrée (34, 35) et une sortie (38) ;
b) fixation d'un embrayage (36) à ladite sortie (38) de ladite boîte de vitesses (27) ;
c) fixation d'une poulie (33) à ladite entrée (34, 35) de ladite boîte de vitesses (27) ;
d) fourniture d'une liaison (32) entre ladite poulie (33) et ledit moteur d'entraînement ;
e) fourniture d'une liaison (37) entre ledit embrayage (36) et un essieu de ladite tondeuse (40) ;
f) fourniture d'un moyen pour mettre en prise et dégager ledit assemblage d'entraînement de telle sorte que quand l'assemblage d'entraînement (21) est en prise, ladite tondeuse est autopropulsée, et quand l'assemblage (21) est dégagé, ladite tondeuse est utilisable manuellement ;
g) placement dudit assemblage d'entraînement (21) sur ladite tondeuse de telle sorte que ladite boîte de vitesses (27) est située au-dessus et à l'avant dudit essieu de roues pour maximiser la superficie définie par ladite ouverture arrière (22) disponible pour recevoir l'herbe dudit plateau de coupe à destination dudit bac à herbe.

25. Procédé selon la revendication 24, dans lequel ladite boîte de vitesses (27) et ledit embrayage (36) sont situés au-dessus dudit essieu de roues (40) avec un jeu suffisant pour maximiser la superficie de ladite ouverture arrière (22) qui permettra à l'herbe de passer après la coupe par ledit plateau de coupe.
